# EUROPÄISCHE PATENTSCHRIFT

(11) **EP 1 529 969 B1**
(45) Veröffentlichungstag und Bekanntmachung des Hinweises auf die Patenterteilung: **05.11.2008**
(21) Anmeldenummer: 04019001.9
(22) Anmeldetag: 11.08.2004
(51) Int. Cl.: F16B 39/24, B60B 3/16, F16B 43/02

(54) **Gegen Lösen gesicherte Radschraubenanordnung für PKW oder sonstige Fahrzeug**
Loosening-proof wheel screw assembly for cars or other vehicles
Dispositif anti-desserrage de vis de roues automobiles ou autres véhicules.

(30) Priorität: 05.11.2003 DE 20317196 U
(43) Veröffentlichungstag der Anmeldung: 11.05.2005
(73) Patentinhaber: A. AGRATI S.p.A., I-20050 Veduggio con Colzano (Milan) (IT)
(72) Erfinder: Agrati, Pierantonio, 20050 Veduggio con Colzano (IT)
(74) Vertreter: Beyer, Rudi

(56) Entgegenhaltungen:
- EP-A- 0 032 643
- EP-A- 1 123 816
- WO-A-02/075170
- GB-A- 1 398 697
- US-A1- 2001 021 851
- US-B1- 6 478 521

## Beschreibung

Die Erfindung betrifft eine Radschraubenanordnung für PKW oder sonstige Fahrzeuge, mit einer Radschraube, die mit ihrem freien Endabschnitt des mit Schraubgewinde versehenen bolzenförmigen Schaftes in eine Bohrung oder Ausnehmung einer Radfelge eingreift und in ein Mitnehmerteil eingeschraubt ist, wobei zwischen einem mit dem Schaft materialmäßig einstückig verbundenen Kopf mit geeigneter Innen- oder Außenprofilierung für einen Werkzeugangriff und der Felge ein Ringkörper angeordnet ist, der eine zentrische Ausnehmung aufweist, die von dem Schaft der Radschraube durchgriffen ist, und dass die einander zugekehrten Mantelflächenbereiche des Kopfes der Radschraube und der zugeordneten Ringinnenmantelfläche des Ringkörpers in Bezug auf die Längsachse der Radschraube zum Kopf der Radschraube konisch bzw. kegelig erweitert ausgebildet sind.

Bei PKW werden die aus Reifen und Felgen bestehenden Räder durch mehrere auf einem Kreisumfang mit gleichmäßigem Winkelabstand zueinander angeordneten Schrauben an einem drehbaren Mitnehmerteil, z. B. an einem Flansch, befestigt, die jeweils eine kreisförmige Durchbrechung (Bohrung) im Mittelteil der Felge durchgreifen und mit einem mit Gewinde versehenen Schaft- oder Bolzenende in ein entsprechendes Gewinde eingeschraubt werden. Die Radschrauben besitzen in der Regel einen Kopf, der mit einer entsprechenden Formgestaltung zum Angriff eines Werkzeuges, zum Beispiel mit einem Außenmehrkant, versehen ist, um die Schraube fest anziehen, aber auch wieder lösen zu können. Dabei sind Radschrauben bekannt, die unter Kopf direkt eine kegelige oder kugelförmige Auflagefläche angepresst haben oder sich unter Zwischenschaltung eines unterlegscheibenartigen Ringkörpers an der Felge abstützen, der in Richtung des Schraubenkopfes zylinderförmig ausgebildet ist.

Nachteilig bei derartigen Anordnungen ist die Gefahr des unbeabsichtigten Lösens der Radschrauben, was insbesondere bei anhaltendem Kurvenfahren und starker Beladung des betreffenden PKW auftreten kann, da die Querbelastung der Radschrauben und ihrer Ringkörper hierbei relativ groß ist und die einteiligen Radschrauben infolge ihrer geringen Klemmlänge keine hinreichende Elastizität aufweisen, es bei den zweiteiligen Radschrauben mit Ringkörper jedoch durch die unvermeidliche Toleranz zwischen Schaft der Radschraube einerseits und der Bohrung des Ringkörpers andererseits zu Querverschiebungen zwischen Radschraube und Ringkörper und damit zu einem ungewollten Lösen der Radschraube kommen kann.

Die zweiteilige Radschraubenanordnung hat außerdem den Nachteil, dass es wegen der verlängerten Bauweise und der Köpfe mit Außenangriffen zu unerwünscht hohen Gewichten bei den gefederten Massen kommt.

Nach der GB-A-1 398 697 ist eine Radschraubenanordnung für Pkw oder sonstige Fahrzeuge vorbekannt, mit einer Radschraube, die mit ihrem freien Endabschnitt des mit Schraubgewinde versehenen bolzenförmigen Schaftes in eine Bohrung oder Ausnehmung einer Radfelge eingreift und in ein Mitnehmerteiler eingeschraubt ist, wobei zwischen einem mit dem Schaft materialmäßig einstückig verbundenen Kopf mit geeigneter Innen- oder Außenprofilierung für ein Werkzeugeingriff und der Felge ein Ringkörper angeordnet ist, der eine zentrische Ausnehmung ausweist, die von dem Schaft der Radschraube durchgriffen ist, wobei der Kopf der Radschraube an seiner dem Ringkörper zugekehrten inneren (unteren) Mantelfläche mit einer konischen Mantelfläche versehen ist, die gegen den ebenfalls mit einer konischen Mantelfläche versehenen Ringkörper weitgehend formschlüssig anliegt, wobei der Ringkörper auch an seiner der Bohrung oder Ausnehmung der Felge zugekehrten Außenmantelfläche mit einer konischen Mantelfläche an der ebenfalls konischen Bohrung formschlüssig anliegt.

Die US-B1-6 478 521 zeigt eine Radschraubenanordnung mit einem Kopf, der einen Außensechskant zum Angriff eines geeigneten Werkzeuges aufweist. Der Kopf besitzt außerdem einen einstückig angeformten, orthogonal zur Bolzenlängsachse verlaufenden Schulteransatz, unterhalb dessen ein seiner dem gewindefreien Bolzenteil zugekehrten Mantelfläche ein etwa balgförmiger Ringkörper angeordnet ist, der mit einem Teil seiner balgförmigen Mantelfläche an eine Radausnehmung anliegt.

Die FR-A-1 079 236 zeigt verschiedenen Unterlegscheiben.

Die EP-A-0 032 643 zeigt eine Radmutter- bzw. Radschraubenanordnung die dem Oberbegriff des Anspruchs 1 entspricht.

Der Erfindung liegt die Aufgabe zugrunde, eine Radschraubenanordnung insbesondere für PKW zu schaffen, die besser gegen unbeabsichtigtes Lösen gesichert ist.

Diese Aufgabe wird durch die in **Patentanspruch 1** wiedergegebenen Merkmale gelöst.

Die erfindungsgemäße Radschraubenanordnung besitzt unter anderem den Vorteil einer besseren Konzentrizität und Positionierung der Radschraube und damit eine bessere Kontrolle der Reibungsverhältnisse als das bei zum Beispiel flachen, zylindrischen Scheiben der Fall ist. Darüber hinaus ergibt sich ein besserer Formschluss zwischen Radschraube und Felge und damit gegen Querbelastung, so dass sich bei einer erfindungsgemäßen Radschraubenanordnung die Radschrauben selbst auch bei langandauernden Kurvenfahren unter Maximalbelastung des betreffenden Fahrzeuges nicht mehr ungewollt lösen können.

Durch den Kontakt zwischen Radschraubenkopf und Ringkörper am äußeren Durchmesser einerseits und durch den Kontakt zwischen Ringkörper und Radfelge etwa in der Mitte der entsprechenden kugeligen oder konvexen Fläche des Ringkörpers andererseits, ergibt sich eine bessere Kontrolle der Reibungsverhältnisse. Außerdem wirkt der Ringkörper ähnlich wie eine Tellerfeder, das heißt also, es findet eine elastische Verformung mit Rückfederkraft statt, die zusätzlich das Löseverhalten der Radschraube positiv unterstützt, also ein ungewolltes Lösen auch bei extremer Beanspruchung verhindert.

Weitere erfinderische Ausgestaltungen sind in den **Patentansprüchen 2** bis **12** beschrieben.

Gemäß **Patentanspruch 2** beträgt der Winkel δ 60 bis 70 bis 90°, während er bei der Ausführungsform nach **Patentanspruch 3** kleiner als 120° ist.

Gemäß **Patentanspruch 4** wird die Dicke des Ringkörpers so bemessen, dass die Elastizität der Radschraube um mindestens 35 % erhöht wird.

Wie in **Anspruch 5** beschrieben, kann der Ringkörper aus einem anderen Material gefertigt werden als die Felge, zum Beispiel aus Titan. An sich ist aber die Materialauswahl beliebig. Hierdurch kann man hinsichtlich der Elastizität unterschiedliche Ergebnisse erreichen, zum anderen wird man unabhängig von dem Felgenmaterial, das also auch aus Aluminium oder Magnesium bzw. entsprechenden Legierungen bestehen kann. Durch Wahl des Materials für den Ringkörper kann man auch Vorsorge dafür treffen, dass kein elektrochemisches Spannungspotenzial und damit keine elektrolytische Korrosion auftritt.

Vorteilhafterweise kann eine erfindungsgemäße Radschraubenanordnung so gewählt werden, dass sie schädliche Chromlegierungen vermeidet. Beschädigungen der Gegenlage, das heißt, der Radfelge, können auch bei Ausführungen aus Aluminium bzw. entsprechenden Legierungen vermieden werden, da der Ringkörper in der Regel auf der Felge bei der Montage unverdrehbar stehen bleibt, während sich die Radschraube relativ zum Ringkörper dreht.

Gemäß **Anspruch 6** ist der Ringkörper unverlierbar auf der Radschraube angebracht, was entweder durch das Gewinde selbst oder durch einen separaten Stützring geschehen kann. Dadurch wird die Handhabung erleichtert.

In den **Ansprüchen 7** bis 12 sind weitere erfinderische Lösungen beschrieben.

In der Zeichnung ist die Erfindung beispielsweise veranschaulicht. Es zeigen:
- Fig. 1: eine Radfelge für einen PKW mit Radschrauben, in perspektivischer Darstellung;
- Fig. 2: einen Längsschnitt, teils abgebrochen dargestellt, durch eine erfindungsgemäße Radschraubenanordnung;
- Fig. 3: eine erfindungsgemäße Radschraube mit Ringkörper in der Ansicht;
- Fig. 4: eine Stirnansicht auf den Kopf der Radschraube gemäß Fig. 3;
- Fig. 5: die aus den Fig. 3 und 4 ersichtliche Radschraube in perspektivischer Darstellung;
- Fig. 6: einen Ringkörper in der Ansicht und
- Fig. 7: einen Axiallängsschnitt zu Fig. 6.

Mit dem Bezugszeichen 1 ist eine Felge für einen PKW veranschaulicht, die in ihrem Mittelteil in üblicher Weise mit mehreren kreisförmigen Durchbrechungen bzw. Bohrungen versehen ist, von denen lediglich eine der Bohrungen mit dem Bezugszeichen 2 versehen wurde.

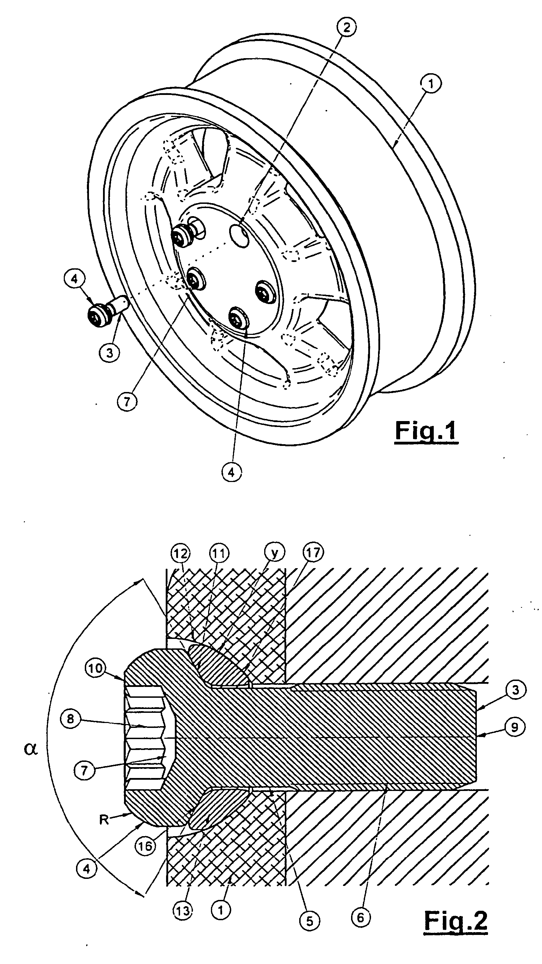

Aus Fig. 1 ist ersichtlich, dass die Felge 1 in diesem Bereich auf einem gedachten Kreis mit gleichbleibenden Winkelabständen über den Umfang des Kreises zueinander angeordnet insgesamt fünf solcher Bohrungen 2 oder dergleichen aufweist.

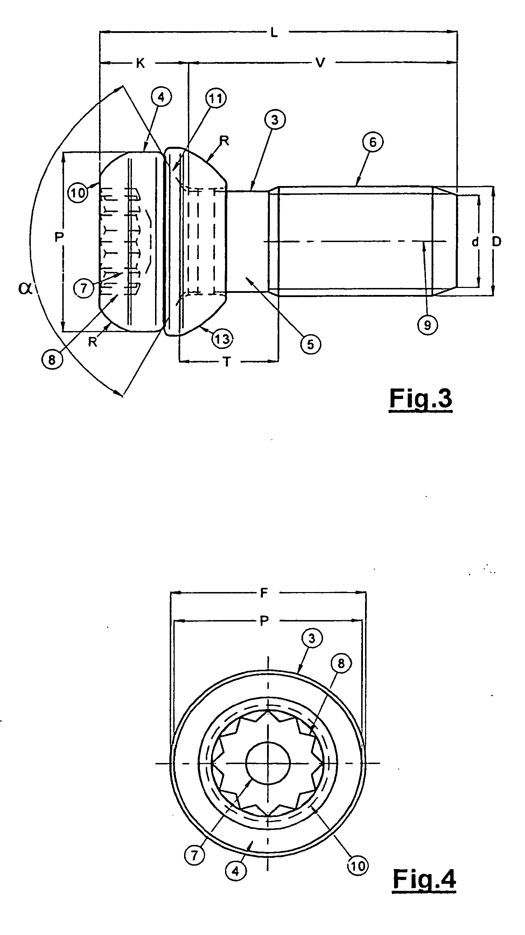

Durch die Bohrungen 2 greift jeweils eine Radschraube hindurch, von denen wiederum lediglich nur eine der Radschrauben mit dem Bezugszeichen 3 bezeichnet ist. Die Radschrauben 3 sind in den Fig. 2 bis 5 in größerem Maßstab dargestellt. Wie hieraus zu erkennen ist, besteht jede Radschraube 3 im wesentlichen aus einem Kopf 4 und einem bolzenförmigen Schaft 5, der aus zwei Längenabschnitten unterschiedlichen Durchmessers D bzw. d besteht (Fig. 3). An den Kopf 4 schließt sich der Schaftlängenteil T mit dem geringeren Durchmesser d an, der gewindelos ist. Materialmäßig einstückig an den Schaftlängenteil T schließt sich der mit Schraubgewinde 6 versehene Längenabschnitt mit dem größeren Durchmesser D an.

Der Buchstabe L bezeichnet die Gesamtlänge der Radschraube 3 und die Buchstaben K bzw. V weitere Längenabschnitte der Radschraube 3, wobei der Längenabschnitt K im wesentlichen die Gesamtlänge des Kopfes 4 kennzeichnet und V die Schaftlänge.

Der Kopf 4 besitzt eine Innenaussparung 7, die zum Angriff eines Werkzeuges, insbesondere eines Schlüssels, ausgebildet ist. Zu diesem Zweck kann die Innenaussparung 7 mit einer geeigneten Formgebung, zum Beispiel mit einem Mehreck oder Vieleck 8 ausgestaltet sein, in den ein Schlüssel (nicht dargestellt) passend eingreift, um die Radschraube 3 um ihre Längsachse 9 in die eine oder andere Richtung zu drehen, also entweder festzuziehen oder loszuschrauben.

Der Kopf 4 der Radschraube 3 besitzt an seiner Außenseite in seinem mittleren Längenabschnitt eine etwa zylindrische Gestaltung, die zu ihrem äußeren Ende nach einem Radius R abgerundet verläuft und in eine ebenflächige, orthogonal zur Längsachse 9 gerichtete Stirnfläche 10 ausmündet.

An den etwa zylindrischen Längenabschnitt des Kopfes 4 schließt sich bei der dargestellten Ausführungsform ein konischer bzw. kegliger, sich auf den Schaftlängenteil T verjüngender Umfangsteil mit dem Konuswinkel α an. Diese konische oder keglige Mantelfläche des Kopfes 4 ist zusätzlich mit dem Bezugszeichen 11 bezeichnet. Der Durchmesser des Kopfes 4 trägt den Buchstaben P (Fig. 4). Der Durchmesser des Kopfes P ist abgestimmt auf den äußeren erweiterten Teil 12 (Fig. 2) der Bohrung 2 der Radfelge 1, so dass der Kopf 4 zumindest teilweise mit seiner axialen Länge in diesem äußeren Teil 12 der Bohrung 2 angeordnet ist (Fig. 1,2).

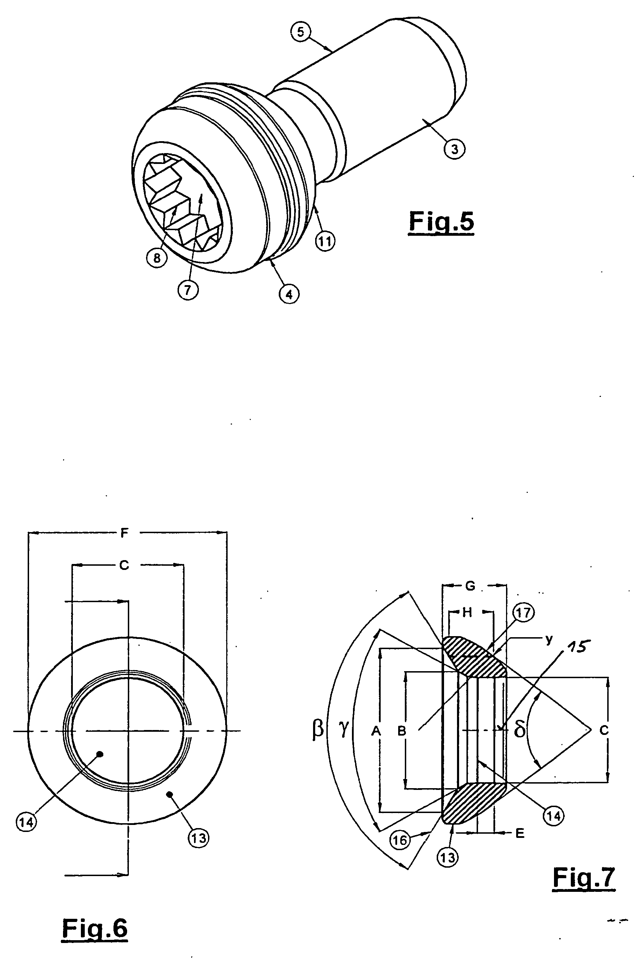

Auf dem gewindelosen Schaftlängenteil T ist bei der erfindungsgemäßen Radschraubenanordnung ein Ringkörper 13 angeordnet, der im einzelnen aus den Fig. 6 und 7 ersichtlich ist. Dieser Ringkörper 13 weist eine zentrische Ausnehmung oder Bohrung 14 auf, die aus unterschiedlichen Längenabschnitten (Fig. 7) besteht. Der Ringkörper 13 besitzt die Länge G (Fig. 7). Mit H ist ein mittlerer axialer Längenabschnitt, parallel zur Längsachse 15 des Ringkörpers 13 bezeichnet. Die gesamte axiale Länge G ist geringer als die axiale Länge des gewindelosen Schaftlängenteils T, kann zum Beispiel nur die Hälfte dieses Schaftlängenteils T oder z. B. ein Drittel davon betragen. Der Außendurchmesser F (Fig. 6) des Ringkörpers 13 ist bei der aus Fig. 3 ersichtlichen Ausführungsform etwas größer bemessen als der Durchmesser P des Kopfes 4 der Radschraube 3, kann aber auch im Bedarfsfalle den gleichen Durchmesser wie der Kopf 4 oder z. B. auch etwas kleiner als dieser sein (nicht dargestellt).

Der kleinste Durchmesser C (Fig. 6) der zentrischen Ausnehmung 14 ist etwas größer als der Durchmesser des schraubenlosen Schaftlängenteils T, so dass der Ringkörper 13 mit gewissem Spiel auf dem Schaftlängenteil T angeordnet ist. Generell wird man den Durchmesser C der zentrischen Ausnehmung 14 so bemessen, dass sich der Ringkörper 13 auch über das mit Gewinde 6 versehene Schaftlängenteil der Radschraube 3 aufschieben und in die aus Fig. 2 und 3 ersichtliche Lage bringen lässt, in der der Ringkörper 13 unmittelbar an der kegligen bzw. konischen Mantelfläche 11 des Kopfes 4 anliegt, sich also in dieser Lage zwischen der Unterseite des Kopfes 4 und dem mit Gewinde 6 versehenen Schaftlängenteil der Radschraube 3 befindet (Fig. 2).

Zu diesem Zweck ist der Ringkörper 13 an seiner dem Kopf 4 zugekehrten Seite unter dem Öffnungswinkel β (Fig. 7) auf einem gewissen axialen Teil konisch ausgebildet, derart, dass sich auch in diesem Bereich eine konische oder kegelige Ringinnenmantelfläche 16 (Fig. 7) ergibt, mit der sich der Ringkörper 13, vorzugsweise formschlüssig, gegen die konische bzw. kegelige Mantelfläche 11 des Kopfes 4 der Radschraube 3 mit dem Öffnungswinkel α weitgehend formschlüssig anlegt, wobei man es durch entsprechende Toleranzen in der Hand hat, die Anordnung so zu wählen, dass der Kontakt zwischen dem Kopf 4 und seiner Mantelfläche 11 und der konischen bzw. kegeligen Ringinnenmantelfläche 16 des Ringkörpers 13 bevorzugt am äußeren Durchmesser stattfindet, was aber nicht ausschließlich gilt.

Wie insbesondere aus den Fig. 2 und 7 zu erkennen ist, ist der Ringkörper 13 an seiner äußeren Mantelfläche ebenfalls im wesentlichen zweiteilig ausgebildet. Etwa im mittleren axialen Längenbereich H ist der Ringkörper 13 ballig, vorliegend nach einem Radius Y geformt, so dass sich hier eine ballige bzw. kugelige Außenmantelfläche 17 ergibt, mit der der Ringkörper 13 in dem entsprechend formmäßig gestalteten äußeren Teil 12 der Bohrung 2 formschlüssig anliegt. Dabei wird die Anordnung bevorzugt so getroffen, dass der Kontakt zwischen Ringkörper 13 und Felge 1 in der Mitte der kugeligen Oberfläche 17 vorhanden ist. Da bevorzugt der Kontakt zwischen Radschraube 3 und Ringkörper 13 am äußeren Durchmesser stattfindet und der Kontakt zwischen Ringkörper 13 und Felge 1 in der Mitte dieses kugeligen Teils vorhanden ist, ergibt sich ein tellerfederelastischer Effekt, der mit der federnden Rückstellkraft des Ringkörpers 13 das bereits obenerwähnte Löseverhalten positiv im Sinne des Nichtlösens unterstützt. Hierzu kann der Ringkörper z. B. aus Federstahl bestehen, während die Felge z. B. aus einer Aluminiumlegierung und die Radschraube 3 wiederum aus einer Stahllegierung, insbesondere aus gehärtetem Stahl, besteht.

Die Kantenbereiche des Ringkörpers 13 sind ebenso wie die entsprechenden Übergangsbereiche am Kopf 4 der Radschraube 3 nach entsprechenden Radien abgerundet ausgebildet, die in der Zeichnung nicht besonders bezeichnet sind.

Im übrigen können die Winkel α und β gleich groß sein und z. B. jeweils 120 Grad, unter Einbeziehung entsprechender Toleranzen, betragen, während bei einem Beispiel der gewindelose Schaftlängenteil T 13 mm und die in dieser Richtung gemessene axiale Länge des Ringkörpers 13 sieben bis etwa acht Millimeter beträgt. Der Radius Y der Balligkeit kann zum Beispiel 13 mm betragen, während der Winkel γ (Fig. 7) zum Beispiel 60 Grad groß ist (Fig. 7). A und B sind verschieden große Durchmesser am Ringkörper 13. Der Ringkörper 13 kann unverlierbar auf dem Schaft 5 angeordnet sein. E ist ein Längenabschnitt des Ringkörpers 13.

Legt man im mittleren Bereich der aus Fig. 7 sich ergebenden konvex gekrümmten Auflagefläche 17 (Mantelfläche) die Tangenten an, so schließen diese den Winkel δ ein, der zum Beispiel 60 bis 70 bis 90 Grad betragen kann, vorzugsweise aber kleiner als 120 Grad ist. In jedem Falle ist der Winkel δ kleiner als der Winkel β und auch kleiner als der Winkel α. Der Scheitel der sich schneidenden Tangenten liegt auf der Längsachse des Ringkörpers 13.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Felge, Radfelge
- 2: Bohrung
- 3: Radschraube
- 4: Kopf
- 5: Schaft, bolzenförmiger
- 6: Schraubgewinde
- 7: Innenaussparung
- 8: Mehreck, Vieleck
- 9: Längsachse der Radschraube 3
- 10: Stirnfläche der Radschraube 3
- 11: Mantelfläche, Oberfläche
- 12: Teil, äußerer, Ausnehmung
- 13: Ringkörper
- 14: Ausnehmung, zentrische, Bohrung
- 15: Längsachse des Ringkörpers 13
- 16: Innenfläche, Ringinnenfläche, Oberfläche
- 17: Außenmantelfläche, Oberfläche
- A: Durchmesser der Ausnehmung 14
- B: " " "
- C: Durchmesser, kleinster
- d: Durchmesser, gewindeloser, am Schaft 5
- D: " , mit Gewinde versehener, am Schaft 5
- E: Längenabschnitt am Ringkörper 13
- F: Außendurchmesser des Ringkörpers 13
- G: Axiale Länge des Ringskörpers 13
- H: Längenabschnitt, mittlerer, axialer
- K: Axiale Länge des Kopfes 4
- L: Gesamtlänge der Radschraube 3
- M: Durchmesser am Ringkörper 13
- P: Durchmesses des Kopfes 4
- R: Radius am Kopf 4
- T: Schaftlängenteil ohne Gewinde
- V: Schaftlänge
- Y: Radius an Außenmantelfläche des Ringkörpers 13
- α: Öffnungswinkel (Kegelwinkel) am Kopf 4, Konuswinkel
- β: Öffnungswinkel einer Öffnung am Ringkörper 13 (Kopf zugekehrte Seite), Konuswinkel
- γ: Öffnungswinkel eines Teils der zentrischen Ausnehmung am Ringkörper 13, Konuswinkel
- δ: Kegel-/Konuswinkel

## Patentansprüche

1. Radschraubenanordnung für PKW oder sonstige Fahrzeuge, mit einer Radschraube (3), die mit ihrem freien Endabschnitt des mit Schraubgewinde (6) versehenen bolzenförmigen Schaftes (5) in eine Bohrung (2) oder Ausnehmung (12) einer Radfelge (1) eingreift und in ein Mitnehmerteil eingeschraubt ist, wobei zwischen einem mit dem Schaft (5) materialmäßig einstückig verbundenen Kopf (4) mit geeigneter Innen- oder Außenprofilierung für einen Werkzeugangriff und der Felge (1) ein Ringkörper (13) angeordnet ist, der eine zentrische Ausnehmung (14) aufweist, die von dem Schaft (5) der Radschraube (3) durchgriffen ist, und wobei die einander zugekehrten Mantelflächenbereiche (11) des Kopfes (4) der Radschraube (3) und der zugeordneten Ringinnenmantelfläche (16) des Ringkörpers (13) in Bezug auf die Längsachse (9) der Radschraube (3) zum Kopf (4) der Radschraube (3) konisch bzw. kegelig erweitert ausgebildet sind, **dadurch gekennzeichnet, dass** die einander zugekehrten und miteinander zusammenwirkenden Oberflächenbereiche von Ringkörper (13) und Bohrung (2) bzw. Ausnehmung (12) der Felge (1) jeweils als Oberflächenbereiche je einer Kugel oder konvex ausgebildet sind, derart, dass der Körperkontakt zwischen der Unterseite des Kopfes (4) der Radschraube (3) und des Ringkörpers (13) am äußeren, dem Kopf (4) zugekehrten Durchmesser und der Kontakt zwischen Ringkörper (13) und der Felge (1) etwa in der Mitte des Ringkörpers (13) erfolgt, derart, dass im mittleren Bereich der sich ergebenden Auflagefläche (17) (Mantelfläche) des Ringkörpers (13) auf diametral gegenüberliegenden Seiten angelegten Tangenten ein Winkel (δ) einschließen, der kleiner ist als der Winkel (β) der konischen bzw. kegeligen Ringinnenmantelfläche (16) des Ringkörpers (13).

2. Radschraubenanordnung nach Anspruch 1, **dadurch gekennzeichnet, dass** der Winkel (δ) 60 bis 70 bis 90° beträgt.

3. Radschraubenanordnung nach Anspruch 1, **dadurch gekennzeichnet, dass** der Winkel (δ) kleiner als 120° ist.

4. Radschraubenanordnung nach Anspruch 1 oder einem der darauffolgenden Ansprüchen, **dadurch gekennzeichnet, dass** die axiale Länge (G) (Dicke) des Ringkörpers (13) so bemessen ist, dass die Elastizität der Radschraube (3) um mindestens 35 % erhöht ist.

5. Radschraubenanordnung nach Anspruch 1 oder einem der darauffolgenden Ansprüche, **dadurch gekennzeichnet, dass** der Ringkörper (13) aus einem anderem Werkstoff als die Radschraube (3) besteht.

6. Radschraubenanordnung nach Anspruch 1 oder einem der darauffolgenden Ansprüche, **dadurch gekennzeichnet, dass** der Ringkörper (13) auf dem Schaft (5) der Radschraube (3) unverlierbar angeordnet ist.

7. Radschraubenanordnung nach Anspruch 1 oder einem der darauffolgenden Ansprüche, **dadurch gekennzeichnet, dass** der Konuswinkel (α) der mit dem Ringkörper (13) zusammenwirkenden Mantelfläche (11) des Kopfes (4) stumpfwinklig ausgebildet ist und dass der Scheitel des Winkels (α) auf der Längsachse (9) der Radschraube (3) liegt.

8. Radschraubenanordnung nach Anspruch 1 oder einem der darauffolgenden Ansprüche, **dadurch gekennzeichnet, dass** die Kegelwinkel (α) der miteinander zusammenwirkenden Mantelflächenbereiche (11, 16) des Kopfes (4) der Radschraube (3) und des Ringkörpers (13) stumpfwinklig sind und zum Kopf (4) hin geöffnet verlaufen.

9. Radschraubenanordnung nach Anspruch 1 oder einem der darauffolgenden Ansprüche, **dadurch gekennzeichnet, dass** die Konuswinkel der miteinander zusammenwirkenden Oberflächenbereiche (11, 16) von Kopf (4) und Ringkörper (13) - unter Einhaltung unterschiedlicher Toleranzen für den Kopf (4) und für den Ringkörper (13) - jeweils 120 Grad betragen.

10. Radschraubenanordnung nach Anspruch 1 oder einem der darauffolgenden Ansprüche, **dadurch gekennzeichnet, dass** der Ringkörper (13) aus Stahl, Aluminium oder aus Titan oder aus Federstahl besteht, während die Radschraube (3) aus gehärtetem Stahl hergestellt ist.

11. Radschraubenanordnung nach Anspruch 1 oder einem der darauffolgenden Ansprüche, **dadurch gekennzeichnet, dass** auf diametral einander gegenüberliegenden Seiten an die Außenmantelfläche (17) des Ringkörpers (13) angelegte Tangenten einen Konus- bzw. Kegelwinkel (δ) einschließen, der kleiner ist als der Öffnungswinkel (Kegelwinkel - α) am Kopf (4).

12. Radschraubenanordnung nach Anspruch 11, **dadurch gekennzeichnet, dass** der Scheitel des Winkels (δ) auf der Längsachse (15) des Ringkörpers (13) angeordnet ist.

## Claims

1. Wheel bolt arrangement for private cars or other vehicles, having a wheel bolt (3) which by its free end portion of the pin-shaped shank (5) provided with a screw thread (6) engages in a hole (2) or recess (12) of a wheel rim (1) and is screwed into a driver portion, where between a head (4) materially forming a single piece with the shank (5) and having an inner or outer profile suitable for the application of a tool and the rim (1) is disposed an annular member (13) having a centric recess (14), through which the shank (5) of the wheel bolt (3) is inserted, and where the opposed lateral surface areas (11) of the head (4) of the wheel bolt (3) and the corresponding annular inner surface (16) of the annular member (13) are made to widen conically or taperedly towards the head (4) of the wheel bolt (3) and relative to the longitudinal axis (9) of the wheel bolt (3), **characterised in that** the opposing and co-acting surface portions of the annular member (13) and the hole (2) or recess (12) of the rim (1) are each constructed as the surface area of a ball or convex such that the physical contact between the underside of the head (4) of the wheel bolt (3) and the annular member (13) on the outer diameter facing the head (4) and the contact between the annular member (13) and the rim (1) takes place roughly in the middle of the annular member (13) such that tangents disposed on diametrically opposed sides in the central portion of the resulting supporting surface (17) (lateral surface area) of the annular member (13) enclose an angle (δ), which is smaller than angle (β) of the conical or tapered annular inner lateral surface area (16) of the annular member (13).

2. Wheel bolt arrangement in accordance with claim 1, **characterised in that** angle (δ) measures 60 to 70 to 90°.

3. Wheel bolt arrangement in accordance with claim 1, **characterised in that** angle (δ) is smaller than 120°.

4. Wheel bolt arrangement in accordance with claim 1 or any one of the claims following it, **characterised in that** the axial length (G) (thickness) of the annular member (13) is dimensioned so that the elasticity of the wheel bolt (3) is increased by at least 35 %.

5. Wheel bolt arrangement in accordance with claim 1 or any one of the claims following it, **characterised in that** the annular member (13) is made of a different material from the wheel bolt (3).

6. Wheel bolt arrangement in accordance with claim 1 or any one of the claims following it, **characterised in that** the annular member (13) is captively disposed on the shank (5) of the wheel bolt (3).

7. Wheel bolt arrangement in accordance with claim 1 or any one of the claims following it, **characterised in that** conical angle (α) of the lateral surface area (11) of the head (4) co-acting with the annular member (13) is constructed as an obtuse angle and that the vertex of the angle (α) is disposed on the longitudinal axis (9) of the wheel bolt (3).

8. Wheel bolt arrangement in accordance with claim 1 or any one of the claims following it, **characterised in that** the taper angles (α) of the co-acting lateral surface area portions (11, 16) of the head (4) of the wheel bolt (3) and the annular member (13) form an obtuse angle and open out towards the head (4).

9. Wheel bolt arrangement in accordance with claim 1 or any one of the claims following it, **characterised in that** the conical angles of the co-acting surface portions (11, 16) of the head (4) and annular member (13), each measure 120 degrees, with different tolerances for the head (4) and the annular member (13).

10. Wheel bolt arrangement in accordance with claim 1 or any one of the claims following it, **characterised in that** the annular member (13) is made of steel, aluminium or titanium or spring steel, while the wheel bolt (3) is made of hardened steel.

11. Wheel bolt arrangement in accordance with claim 1 or any one of the claims following it, **characterised in that** tangents disposed on the outer lateral surface area (17) of the annular member (13) on diametrically opposing sides enclose a conical or tapered angle (δ) which is smaller than the opening angle (taper angle - α) on the head (4).

12. Wheel bolt arrangement in accordance with claim 11, **characterised in that** the vertex of the angle (δ) is disposed on the longitudinal axis (15) of the annular member (13).

## Revendications

1. Agencement de vis sur roues de voitures particulières ou véhicules divers, avec une vis (3) sur roue dont l'extrémité libre de tige (5) en forme de goujon dotée d'un filetage (6) pénètre dans un alésage (2) ou évidement (12) d'une jante (1) et est vissée dans une pièce d'entraînement, sachant qu'entre une tête (4) - reliée matériellement monobloc avec la tige (5) et présentant un profilage interne ou externe adéquat pour permettre l'attaque d'un outil - et la jante (1) se trouve un corps annulaire (13) comportant un évidement (14) central traversé par la tige (5) de la vis (3) sur roue, et sachant que les zones (11) des enveloppes se regardant que comportent la tête (4) de vis (3) sur roue et l'enveloppe (16) intérieure annulaire y affectée du corps annulaire (13) présentent, référée à l'axe longitudinal (9) de la vis (3) sur roue par rapport à la tête (4) de la vis (3) sur roue, une géométrie à évasement conique et/ou conoïde, **caractérisé en ce que** les zones superficielles se regardant et interagissant du corps annulaire (13) et de l'alésage (2) et/ou de l'évidement (12) de la jante (1) sont configurées chacune en zones superficielles d'une sphère ou convexes, de sorte que le contact corporel entre la face inférieure de la tête (4) de la vis (3) sur roue et du corps annulaire (13) contre le diamètre extérieur regardant la tête (4) et le contact entre le corps annulaire (13) et la jante (1) ont lieu approximativement au milieu du corps annulaire (13) de sorte que dans la zone médiane de la surface d'applique (17) (enveloppe) qui en résulte sur le **corps** annulaire (13), des tangentes placées sur des côtés diamétralement opposés incluent un angle (δ) inférieur à l'angle (β) de l'enveloppe (16) intérieure annulaire conique et/ou conoïde du corps annulaire (13).

2. Agencement de vis sur roues de voiture selon la revendication 1, **caractérisé en ce que** l'angle (δ) est de 60 à 70 à 90°.

3. Agencement de vis sur roues de voiture selon la revendication 1, **caractérisé en ce que** l'angle (δ) est inférieur à 120°.

4. Agencement de vis sur roues de voiture selon la revendication 1 ou l'une des revendications suivantes, **caractérisé en ce que** la longueur axiale (G) (épaisseur) du corps annulaire (13) a été dimensionnée de sorte à accroître l'élasticité de la vis (3) sur roue d'au moins 35 %.

5. Agencement de vis sur roues selon la revendication 1 ou l'une des revendications suivantes, **caractérisé en ce que** le corps annulaire (13) se compose d'un autre matériau que la vis (3) sur roue.

6. Agencement de vis sur roues selon la revendication 1 ou l'une des revendications suivantes, **caractérisé en ce que** le corps annulaire (13) est monté de façon impossible à perdre sur la tige (5) de la vis (3) sur roue.

7. Agencement de vis sur roues selon la revendication 1 ou l'une des revendications suivantes, **caractérisé en ce que** l'angle (α) de cône que présente l'enveloppe (11) de la tête (4) interagissant avec le corps annulaire (13) est configuré à angle obtus et **en ce que** le sommet de l'angle (α) se trouve sur l'axe longitudinal (9) de la vis (3) sur roue.

8. Agencement de vis sur roues selon la revendication 1 ou l'une des revendications suivantes, **caractérisé en ce que** les angles coniques (α) des zones (11, 16) d'enveloppe - qui interagissent entre elles - de la tête (4) de la vis (3) sur roue et du corps annulaire (13), sont obtus et présentent un tracé allant en s'ouvrant en direction de la tête (4).

9. Agencement de vis sur roues selon la revendication 1 ou l'une des revendications suivantes, **caractérisé en ce que** les angles des cônes formés par les zones superficielles (11, 16) - interagissant entre elles - de la tête (4) et du corps annulaire (12) s'élèvent, tout en respectant des tolérances différentes affectées à la tête (4) et au corps annulaire (13), à 120 degrés.

10. Agencement de vis sur roues selon la revendication 1 ou l'une des revendications suivantes, **caractérisé en ce que** le corps annulaire (13) est en acier, aluminium ou en titane ou acier à ressort, tandis que la vis (3) sur roue est fabriquée en acier trempé.

11. Agencement de vis sur roues selon la revendication 1 ou l'une des revendications suivantes, **caractérisé en ce que**, sur des côtés diamétralement opposés, des tangentes en contact avec l'enveloppe extérieure (17) du corps annulaire (13) incluent un angle conique et/ou conoïde (δ) plus petit que l'angle d'ouverture (angle conoïde - α) contre la tête (4).

12. Agencement de vis sur roues selon la revendication 11, **caractérisé en ce que** le sommet de l'angle (δ) est agencé sur l'axe longitudinal (15) du corps annulaire (13).
